Europäisches Patentamt

European Patent Office

Office européen des brevets

(11) Numéro de publication: **0 113 281**
**B1**

(12) **FASCICULE DE BREVET EUROPÉEN**

(45) Date de publication du fascicule du brevet:
12.08.87

(51) Int. Cl.⁴: **B 22 F 9/20**, C 22 B 3/00

(21) Numéro de dépôt: **83402484.6**

(22) Date de dépôt: **20.12.83**

(54) **Procédé de réduction de composés métalliques par les polyols, et poudres métalliques obtenues par ce procédé.**

(30) Priorité: 21.12.82 FR 8221483

(43) Date de publication de la demande:
11.07.84 Bulletin 84/28

(45) Mention de la délivrance du brevet:
12.08.87 Bulletin 87/33

(84) Etats contractants désignés:
AT BE CH DE FR GB IT LI LU NL SE

(56) Documents cité:
FR-A-1 488 295
US-A-3 778 252
US-A-4 004 917
US-A-4 268 302
US-A-4 349 380

CHEMICAL ABSTRACTS, vol. 82, 1975, page 470, no. 162909y, Columbus, Ohio, US A.G. NEPOKOICHITSKII et al.: "Reduction of metal oxides by laser radiation"
CHEMICAL ABSTRACTS, vol. 82, 1975, page 45, no. 58677k, Columbus, Ohio, US V.A. BELYI et al.: "Improving the reliability and durability of metal-polymer friction components"

(73) Titulaire: UNIVERSITE PARIS VII, 2, Place Jussieu, F-75221 Paris Cedex 05 (FR)

(72) Inventeur: Figlarz, Michel, 79- 81, avenue Daniel Casanova, F-94200 Ivry (FR)
Inventeur: Fievet, Fernand, 18- 20, rue Mathis, F-75019 Paris (FR)
Inventeur: Lagier, Jean- Pierre, 13, rue Notre Dame, F-91450 Soisy- sur- Seine (FR)

(74) Mandataire: Nony, Michel, Cabinet Nony 29, rue Cambacérès, F-75008 Paris (FR)

## Description

La présente invention a pour objet un procédé de réduction en phase liquide de composés métalliques solides, ainsi que les poudres métalliques obtenues par ce procédé.

On sait que les métaux sont couramment utilisés sous forme de poudres dans de nombreuses applications telles que la préparation d'alliages frittés, de pièces poreuses frittées (filtres, coussinets auto-lubrifiants), de pièces composites (cermets,...) ou encore dans la préparation de colles conductrices de l'électricité (par exemple colles conductrices à l'argent ou autres métaux) ou dans la préparation de catalyseurs. En outre les métaux magnétiques sous forme de poudres sont utilisables notamment dans la fabrication de bandes, cartes, tickets ou disques magnétiques.

On a maintenant découvert qu'il est possible d'obtenir certains métaux sous forme de poudres microniques par réduction de divers composés de ces métaux par des polyols. On a en effet découvert que les polyols possédaient un pouvoir réducteur suffisant pour réduire les composés de départ jusqu'au stade du métal (degré d'oxydation = 0).

Le procédé de l'invention apparaît donc intéressant, notamment dans le domaine de la métallurgie des poudres, en raison de sa simplicité, de son caractère économique et de sa transposition aisée à l'échelle industrielle en vue de l'obtention de métaux purs.

En outre, comme le montrera la lecture de la partie expérimentale ci-après, la taille et la forme des particules, de même que leur degré d'homogénéité, peuvent dans certains cas être contrôlés en jouant sur la nature du composé de départ et/ou du polyol utilisé.

Ce procédé de l'invention est également applicable de façon intéressante dans le domaine de la métallurgie extractive de certains métaux, en particulier dans le cas du nickel, du cuivre et du cobalt.

Le procédé de la présente demande possède un certain nombre de caractères surprenants:

- malgré la faible solubilité des composés solides de départ la réduction s'effectue suivant le mécanisme général suivant: dissolution, réduction en solution, germination et croissance du métal à partir de la solution; ce mécanisme peut être déduit du fait qu'il n'existe pas de parenté directe entre la forme des particules du composé de départ et celle des particules du métal formé; en outre, dans quelques exemples particuliers, la dissolution complète du produit de départ précède l'apparition de la phase métallique et cette dissolution peut ainsi être observée directement;

- les polyols utilisés dans les conditions du procédé ont un pouvoir réducteur suffisant pour permettre non seulement l'obtention de métaux peu électropositifs mais aussi l'obtention de métaux relativement électropositifs comme le nickel, le cobalt ou le plomb; il est également surprenant de constater que le procédé permet d'obtenir le plomb mais non l'étain, alors que ces deux métaux ont cependant une électropositivité comparable.

Le brevet U.S. 4 349 380 décrit un procédé de récupération de métaux par réduction de certains dérivés métalliques, en particulier de sels ou oxydes des métaux des groupes Ib et 8 de la classification périodique des éléments, en métaux correspondants, par l'action d'un réactif obtenu en faisant réagir un polyglycol sur un métal alcalin en présence d'oxygène. Il est clair que c'est le métal alcalin qui joue ici le rôle de réducteur. Ce procédé, qui implique l'utilisation d'un métal alcalin dont la manipulation en présence d'un glycol est potentiellement dangereuse, n'est en outre pas destinée à la production de particules métalliques ayant une morphologie particulière.

La présente invention a pour objet un procédé d'obtention d'une poudre métallique par réduction en phase liquide d'un composé solide choisi parmi les oxydes, les hydroxydes ou les sels métalliques, caractérisé par le fait que l'on soumet à une réduction par un polyol ledit composé solide d'un métal choisi dans le groupe constitué par l'or, le palladium, le platine, l'iridium, l'osmium, le cuivre, l'argent, le nickel, le cobalt, le plomb et le cadmium, par chauffage d'une suspension du produit de départ dans un polyol ou un mélange de polyols liquide à la température réactionnelle, et que l'on isole le précipité métallique formé.

Il convient d'insister sur le fait que le procédé de l'invention est réalisable sans qu'il soit nécessaire de prendre des mesures spéciales destinées à solubiliser au préalable le composé solide de départ (celui-ci, même s'il est très peu soluble, se solubilise progressivement dans le polyol). En particulier, on opère en l'absence d'eau ajoutée, sans toutefois que le procédé de l'invention nécessite pour autant l'utilisation de produits de départ rigoureusement anhydres.

On a observé en outre que, dans certains cas, la poudre métallique obtenue comporte des insertions de carbone, soit sous la forme de solution solide, soit sous la forme d'un carbure bien défini. L'obtention d'une telle poudre est donc également envisagée par la présente invention.

C'est ainsi qu'en traitant l'hydroxyde de nickel cristallisé RIEDEL de HAEN dans le diéthylèneglycol, le triéthylèneglycol ou le tétraéthylèneglycol, à l'ébullition, on obtient un composé noir non magnétique identifié d'après son spectre aux Rayons X comme étant le carbure $Ni_3C$. Il faut signaler que le traitement de poudre de nickel dans ces glycols à l'ébullition conduit également à la formation de ce carbure. Avec l'hydroxyde de cobalt, on peut observer aussi une carburation, mais moins importante.

Les carbures de nickel et de cobalt sont utilisables notamment comme charges dans des matières plastiques.

Dans des modes d'exécution particuliers, le procédé de la présente demande peut encore présenter les caractéristiques suivantes, prises isolément ou en combinaison:

- on opère généralement à température supérieure à 85°C et en particulier à température supérieure à 100°C. On peut par exemple effectuer la réaction à la température d'ébullition du polyol, notamment entre 100 et 350°C, ou bien dans d'autres cas entre 150 et 350°C; on peut aussi opérer à température inférieure à la température d'ébullition; il est possible soit de mettre en suspension le produit de départ à froid dans le polyol puis de chauffer, soit de mettre en suspension le produit de départ dans le polyol déjà chauffé;

- le polyol est soit un glycol aliphatique, soit un polyéther de glycol correspondant, liquide à la température réactionelle; ledit glycol alipathique est par exemple un alkylène glycol ayant sur la chaîne principale jusqu'à 6 atomes de carbone, c'est-à-dire l'éthanediol, un propanediol, un butanediol, un pentanediol ou un hexanediol, ainsi que les polyalkylèneglycols dérivant de ces alkylèneglycols;

- ledit polyol est choisi dans le groupe constitué par l'éthylèneglycol, le diéthylèneglycol, le triéthylèneglycol, les propylèneglycols, les butanediols, le dipropylèneglycol et les polyéthylèneglycols liquides à la température réactionnelle, par exemple le polyéthylèneglycol 300;

- ledit polyol est le glycérol;

- on effectue la réaction de réduction pendant un temps suffisant pour que la réaction soit complète ou que le taux de conversion ait atteint une limite minimum prédéterminée; généralement ce temps varie de quelques dizaines de minutes à quelques jours;

- on peut dans certains cas favoriser la réaction en faisant barboter dans le milieu réactionnel un gaz réducteur, comme par exemple l'hydrogène;

- on isole en fin de réaction le précipité métallique formé, par exemple par filtration ou par centrifugation.

Parmi les polyols particulièrement intéressants on citera plus spécialement la série des diols suivants: éthylèneglycol, diéthylèneglycol, triéthylèneglycol, tétraéthylèneglycol, propanediol-1,2, dipropylèneglycol, butanediol-1,2, butanediol-1,3, butanediol-1,4 et butanediol-2,3. L'utilisation de ces glycols s'est avérée particulièrement avantageuse en raison de leur pouvoir réducteur important, de leur température d'ébullition s'échelonnant entre 185 et 328°C, de leur bonne stabilité thermique et de leur faible prix de revient. En outre ces glycols posent peu de problèmes de toxicité.

Lorsque la réaction de réduction est difficile avec l'éthylèneglycol il est souvent possible d'obtenir des meilleurs résultats, avec des temps de réaction moins importamts, en utilisant les homologues supérieurs (diéthylèneglycol, triéthylèneglycol, etc...). Cela est vrai par exemple dans le cas du plomb et du cadmium. On notera toutefois que cette règle n'est pas générale.

Il convient de noter que, dans de bonnes conditions, on peut produire 100 g de métal avec environ 1 à 2 litres de polyol.

D'un point de vue économique, il est intéressant de noter que les solvants peuvent être réutilisés de deux manières: soit directement après séparation de la poudre à la suite de la réaction, soit en retraitant ce résidu liquide par distillation fractionnée.

Il faut également retenir qu'il est possible de faire varier pour un même métal les caractéristiques morphologiques des échantillons obtenus en jouant sur différents paramétres par exemple:

- température de réduction,
- nature du polyol utilisé,
- nature du composé de départ.

L'utilisation rationnelle de ces facteurs, en liaison avec l'observation expérimentale, permet d'obtenir des grains de formes et tailles très variées. Cela est illustré par la partie expérimentale ci-après

En outre, la masse volumique apparente (M.V.A.) qui est une caractéristique importante dans le domaine des poudres, peut varier elle aussi avec la méthode de préparation utilisée.

C'est ainsi qu'avec le cuivre et le nickel, on a pu obtenir les valeurs suivantes:

- cuivre: M.V.A. variant de 0,7 à 3,1 $g/cm^3$
- nickel: M.V.A. variant de 0,35 à 1,6 $g/cm^3$

Par ailleurs il est intéressant de noter que sur toutes les poudres obtenues, bien qu'elles soient souvent très fines, on n'a jamais observé de phénomène de pyrophoricité (point intéressant particulièrement dans les cas du cobalt et du nickel où, par voie sèche, la pyrophoricité est souvent la règle).

L'invention a en particulier pour objet un procédé tel que décrit ci-dessus dans lequel:

- le produit de départ est l'hydroxyde de nickel $Ni(OH)_2$, l'oxyde de nickel $NiO$ ou un sel de nickel, par exemple l'acétate;

- le produit de départ est l'hydroxyde de cuivre $Cu(OH)_2$, un oxyde de cuivre ($CuO$ ou $Cu_2O$) ou un sel de cuivre tel que par exemple l'acétate cuivrique ou le sulfate cuivrique;

- le produit de départ est un sel d'argent tel que l'acétate;

- le produit de départ est l'hydroxyde de cobalt $Co(OH)_2$, l'oxyde de cobalt $Co_3O_4$ ou un sel de cobalt;

- le produit de départ est l'oxyde de plomb $PbO$ ou un sel de plomb;

- le produit de départ est l'hydroxyde de cadmium $Cd(OH)_2$ ou un sel de cadmium.

L'invention a également pour objet les poudres métalliques obtenues par le procédé décrit ci-dessus, et en particulier les poudres métalliques décrites ci-après dans la partie expérimentale.

Les exemples suivants illustrent l'invention sans toutefois la limiter.

## Exemple 1

On utilise comme produit de départ l'hydroxyde de nickel Ni(OH)$_2$ de qualité technique commercialisé par la firme RIEDEL de HAEN; 12 g de ce produit sont mis en suspension dans 200 cm$^3$ d'éthylèneglycol dans un ballon en verre reposant sur un chauffe-ballon muni d'un système d'agitation magnétique. Le ballon est surmonté par un réfrigérant classique refroidi par une circulation d'eau. On maintient la solution à l'ébullition à reflux. L'ébullition est prolongée durant 68 heures, puis on arrête le chauffage et laisse refroidir. Par centrifugation, on sépare ensuite la poudre noire précipitée de la solution, elle-même de couleur noirâtre. Le précipité est lavé plusieurs fois à l'alcool avec centrifugations intermédiaires. Le produit solide obtenu après séchage se présente sous la forme d'une poudre noire, fine, magnétique. L'examen aux R.X. montre qu'il s'agit du nickel métallique. L'examen au microscope électronique à balayage montre que les particules métalliques sont des disques sensiblement hexagonaux avec un diamètre moyen de 0,3 micromètre. La transformation est pratiquement quantitative.

## Exemple 2

De façon analogue, en traitant un hydroxyde de nickel cristallisé préparé à l'autoclave selon le procédé décrit dans la référence (1), on obtient après 6 jours à l'ébullition dans l'éthylèneglycol une poudre de nickel métallique sous la forme de particules sphériques ayant un diamètre moyen de 2 micromètres.

Référence (1): S. LE BIHAN, M. FIGLARZ, Thermochimica Acta, 6 (1973) p.319-326.

## Exemple 3

De façon analogue, l'hydroxyde de nickel turbostratique, préparé suivant le procédé de la référence (2) et traité à l'ébullition dans l'éthylèneglycol pendant 42 heures, donne une poudre de nickel sous la forme de particules sphériques assez homogènes présentant un diamètre moyen de 1 micromètre; ces particules ont tendance à s'agglomérer en filaments.

Référence (2): S. LE BIHAN, J. GUENOT, M. FIGLARZ, C.R. Acad.Sci.Paris, série C, t. 270, p.2131-2133 (1970).

## Exemple 4

De façon analogue, en chauffant à l'ébullition dans l'éthylèneglycol durant 6 jours un oxyde de nickel NiO très fin prepare suivant le procédé rence (3), on observe la précipitation de nickel sous forme de particules irrégulières à texture lamellaire (diamètre moyen de particules: 0,1 micromètre) qui s'agglomèrent en amas.

Référence (3): F. FIEVET, M. FIGLARZ, J. Catalysis, 39 (1975) p. 350-356.

## Exemple 5

De façon analogue, en traitant à l'ébullition à reflux dans l'éthylène-glycol en excès durant 24 heures de l'hydroxyde de cobalt Co(OH)$_2$, commercialisé par la firme RIEDEL DE HAEN, on obtient des particules de cobalt sensiblement sphériques de diamètre moyen 1 micromètre; ces particules ont tendance à s'agglomérer en filaments.

## Exemple 6

De façon analogue, l'oxyde de cobalt Co$_3$O$_4$ commercial (PROLABO) traité 3 jours à l'ébullition dans l'éthylèneglycol, conduit également à l'obtention de cobalt sous la forme de particules sphériques hérissées de pointes. Ces particules ont un diamètre moyen de 5 micromètres.

Il faut souligner la très basse température de réduction de Co$_3$O$_4$ par cette méthode alors que par voie sèche la réduction par l'hydrogène nécessite pour une réaction complète des températures plus élevées.

## Exemple 7

De façon analogue, on traite un hydroxyde de cuivre commercial Cu (OH)$_2$ de la firme KEK à l'ébullition à reflux dans l'éthylèneglycol durant 1 heure 30 min. et l'on obtient de très fines particules de cuivre grossièrement sphériques et assez homogènes (diamètre moyen = 0,3 micromètre).

## Exemple 8

En traitant de façon analogue l'acétate de cuivre (CH$_3$COO)$_2$Cu,H$_2$O, commmercialisé par MERCK, à l'ébullition dans l'éthylèneglycol durant 2 heures 30 min. on obtient des particules de cuivre de diamètre moyen 1,8 micromètre environ.

## Exemple 9

De façon analogue, on traite du CuO commercial (MERCK) à l'ébullition dans l'éthylèneglycol durant 3 heures. On obtient des particules de cuivre de forme hexagonale et de dimensions hétérogènes (de 0,5 à 2 micromètres) présentant des facettes. Sur les grosses particules on observe fréquemment des sortes de "crevasses" géométriques.

**Exemple 10**

De façon analogue, du sulfate de cuivre $CuSO_4$, $5H_2O$ (PROLABO) traité pendant 25 min. à l'ébullition à reflux dans le glycérol donne un précipité de cuivre sous la forme d'un mélange de particules grossièrement sphériques, de diamètre moyen 5 micromètres environ et de bâtonnets d'environ 10 micromètres de longueur et de quelques micromètres de largeur.

**Exemple 11**

De façon analogue, l'hydroxyde $Cu(OH)_2$ commercial (KEK) traité à l'ébullition à reflux dans le glycérol durant 1 heure 30 min. est transformé en cuivre métallique. Les particules obtenues sont sensiblement plus grosses que celles obtenues avec l'éthylèneglycol; le diamètre moyen observé des particules est d'environ 1 micromètre. On note sur les plus grosses particules des facettes avec des "crevasses".

**Exemple 12**

De façon analogue, l'oxyde de plomb PbO (PROLABO) traité à l'ébullition dans le triéthylèneglycol pendant 1 h 30 min. donne une poudre de plomb sous forme de bâtonnets ayant environ 0,5 micromètre de long et moins de 0,1 micromètre de large, ayant tendance à s'agglomérer en amas sphériques de diamètre moyen d'environ 2 micromètres, chaque amas étant formé de bâtonnets imbriques.

**Exemple 13**

De façon analogue, l'hydroxyde de cadmium $Cd(OH)_2$ (CARLO ERBA) traité dans le diéthylèneglycol à l'ébullition pendant 3 h 30 min. donne naissance à une suspension contenant du cadmium métallique.

**Exemple 14**

En opérant de façon analogue, au départ de $Co(OH)_2$, dans le diéthylèneglycol, la réaction de transformation en cobalt métallique est pratiquement complète au bout d'1 heure 30 min.

**Exemple 15**

En opérant de façon analogue, on traite l'acetate d'argent (PROLABO) à l'ébullition dans l'éthylèneglycol pendant quelques heures et on obtient une poudre d'argent sous la forme de grains grossièrement sphériques ayant un diamètre moyen d'environ 2 micromètres.

**Exemple 16**

En opérant de façon analogue, au départ d'acétate de nickel $Ni(CH_3COO)_2$, $4H_2O$ (VENTRON) que l'on traite pendant 2 h 30 min. dans l'éthylèneglycol à l'ébullition, on obtient une poudre de nickel sous la forme de particules quasi-sphériques et homogènes ayant un diamètre moyen d'environ 0,3 micromètre.

**Exemple 17**

L'oxyde de plomb PbO (PROLABO) traité pendant 2 h dans le tétraéthylèneglycol à l'ébullition donne des particules de plomb métallique ayant des formes très géométriques: sphères, tétraèdres et octaèdres mélangés, mesurant 1 à 2 micromètres selon leur plus grande dimension.

**Exemple 18**

Si on effectue la réduction de PbO dans le diéthylèneglycol, on obtient des particules sphériques très crevassées, ayant un diamètre de 2 micromètres environ.

**Exemple 19**

Dans 100 cm$^3$ de polyéthélèneglycol 300, en traitant 2 g de CuO MERK durant 3 heures à l'ébullition, on obtient du cuivre métallique sous forme de grains de quelques dixièmes de micromètre.

**Exemple 20**

Dans 100 cm$^3$ de propylèneglycol (propane diol-1 2) (T.E. = 189° C) (T.E. = température d'ébullition) on ajoute 5 g de PbO en maintenant l'ébullition 20 heures. On obtient du Pb métal. Les particules obtenues sont très originales: Il s'agit d'un mélange de longs filaments étroits (0,5 micromètre sur 10 ou plusieur dizaines de micromètres) avec des petites plaquettes plus ou moins compactes de diamètre 0,5 micromètre environ.

## Exemple 21

Le maintien, dans 100 cm$^3$ de dipropylèneglycol (T.E. = 230°C), à l'ébullition, de 4 g de Ni(OH)$_2$ RIEDEL de HAEN, durant 22 heures, produit du nickel métallique.

## Exemple 22

Utilisation des divers butanediols.
a) Réduction de Ni(OH)$_2$ RIEDEL de HAEN.
Utilisation de butanediol-1,2 (T.E. = 191°C)
2 g de Ni(OH)$_2$, traités dans 100 cm de ce solvant et maintenus durant 68 heures à l'ébullition, produisent du nickel métallique.
Utilisation de butanediol-1,3 (T.E. = 207°C)
Dans les mêmes conditions (2 g - 100 cm$^3$ - 68 heures) la poudre obtenue est ici vert clair et ne contient pas de nickel.
Utilisation de butanediol-1,4 (T.E. = 230°C)
On opère comme précédemment, mais on réduit le temps de chauffe (18 heures). La réaction produit une poudre de nickel.
Utilisation de butanediol-2,3 (T.E. = 185°C).
Dans les mêmes conditions (2 g - 100 cm$^3$ - 18 heures) on obtient le même résultat qu'avec le butanediol-1,4.
b) Réduction de Ni (OH)$_2$ turbostratique.
On a observé que cet hydroxyde particulier est plus difficile à réduire en métal. En utilisant les mêmes conditions (2 g - 100 cm$^3$ -68 heures), pour les quatre butanediols on observe que seul, le butanediol-2,3 permet une production notable de nickel.
c) Conclusion sur l'utilisation des butanediols.
On observe avec ces quatre isomères que la réduction dépend des positions relatives des 2 fonctions alcool, et le meilleur réducteur est, de façon surprenante, celui qui a la T.E. la plus basse (butanediol-2,3). Le moins bon réducteur des quatre s'avère être le butanediol-1,3; on relèvera cependant que ce dernier permet la réduction de CuO en Cu. On notera aussi que le facteur température n'est pas forcément celui qui prédomine si l'on considére le pouvoir réducteur d'un diol.

## Exemple 23

Utilisation d'un mélange éthylèneglycol-glycérol.
Dans un ballon de 10 litres on traite 325 g de CuO technique PROLABO dans 5 litres de solution formés avec 3 litres d'éthylèneglycol et 2 litres de glycérol.
Ce mélange est agité; après une montée en température d'environ 1 heure, puis le maintien pendant 1 heure de ladite solution à une température de 196 ± 4°C, on laisse refroidir en agitant jusqu'à 170°C et on laisse enfin le refroidissement se terminer sans agitation. Par lavage à l'alcool on recueille 254 g de cuivre dont les grains élémentaires ont un diamètre moyen compris entre 1 et 4 micromètres.

## Exemple 24

Exemple comparatif
On voit à partir des exemples précédents que de nombreux polyols, ainsi que des polyéthers de ces polyols (ceux de l'éthylèneglycol et du prolylèneglycol par exemple), peuvent être utilisés selon le procédé de l'invention.
Les monoalcools ne semblent pas convenir: à titre comparatif, on a traité durant 1 h 30 à l'ébullition du Cu(OH)$_2$ dans de l'octanol qui présente une température d'ébullition sensiblement égale à celle de l'éthylèneglycol: au lieu de cuivre métallique, on obtient alors un mélange CuO + Cu$_2$O; la réduction n'est que très partielle là où elle est complète avec l'éthylèneglycol. Notons aussi que le même octanol, après plus de 50 heures à l'ébullition, ne réduit pas le Ni(OH)$_2$ (RIEDEL de HAEN).

## Exemple 25

Production d'argent à 86°C.
On met 1 g d'acétate d'argent dans 150 cm$^3$ de glycérol; la température de la solution agitée est maintenue à 86°C et cela durant environ 22 heures. On obtient alors de l'argent avec des grains en forme de galets ronds, de diamètre moyen compris entre 1 et 3 micromètres.

## Exemple 26

Production de cuivre à 155°C.
2 g de CuO MERCK sont agités avec 100 cm$^3$ d'éthylèneglycol durant 17 heures avec une température maintenue à 155°C. Les grains du cuivre obtenu (exempt de CuO) sont des polyèdres irréguliers de 5 à 10 micromètres qui ont tendance à former des agrégats compacts. Par contre, le traitement du CuO à 127°C est inefficace.

## Exemple 27

Utilisation d'un gaz réducteur auxiliaire

L'utilisation d'un gaz réducteur auxiliaire peut améliorer le rendement de la réduction et accélérer la cinétique de réduction.

On peut par exemple utiliser l'hydrogène. L'efficacité de cet adjuvant est illustrée sur l'exemple suivant.

On traite à 150°C durant environ 10 heures une solution de 200 cm$^3$ d'éthylèneglycol contenant 4 g de Ni(OH)$_2$ RIEDEL de HAEN en faisant barboter de l'hydrogène gazeux bulle à bulle. Après ce traitement la poudre obtenue se révèle constituée surtout de Ni métal avec un reste d'hydroxyde.

Il faut noter le caractère général des effets produits par l'utilisation d'un gaz réducteur auxiliaire qui a été illustré sur un exemple; on peut éventuellement utiliser des gaz réducteurs autres que l'hydrogène.

## Exemple 28

Influence de la température sur la taille des grains.

Pour illustrer cet effet on a traité 2 g de CuO dans 100 cm$^3$ de polyol à diverses températures:

. l'éthylèneglycol à 150°C - (taille 7,5 micromètres)

. l'éthylèneglycol (TE = 197°C) à l'ébullition - (taille 2,5 micromètres)

. le diéthylèmeglycol (TE = 245°C) à l'ébullition (taille 0,2 micromètre)

. le triéylèneglycol (TE = 278°C) à l'ébullition - (taille 0,2 micromètre)

. le tétraéthylèneglycol (TE = 328°C) à l'ébullition - (taille 0,3 micromètre)

. le polyéthylèneglycol 300 à l'ébullition (taille 0,3 micromètre)

On observe que le diamètre moyen des particules obtenues est plus grand lorsque la température de réaction est plus basse.

## Exemple 29

On traite 170 g d'oxyde Cu$_2$O (KOCH LIGHT) dans un mélange de 450 cm$^3$ d'éthylèneglycol + 300 cm$^3$ de glycérol. Cette solution est maintenue à l'ébullition durant 21 heures. On obtient dans ces conditions du cuivre métallique sous forme de grains fins mélangés avec des amas beaucoup plus gros.

## Exemple 30

Dans 100 cm$^3$ de diéthylèneglycol à l'ébullition on traite 1 g d'oxalate de cobalt CoC$_2$O$_4$,2H$_2$O; après 69 heures on obtient du cobalt métallique (phases cubique et hexagonale mélangées).

## Exemple 31

Obtention de carbures

Dans 200 cm$^3$ de triéthylèneglycol on traite 2 g de Ni(OH)$_2$ RIEDEL de HAEN.

On maintient l'agitation et l'ébullition durant 140 heures. Le résidu solide extrait est constitué par un mélange Ni$_3$C + Ni(OH)$_2$. On peut isoler Ni$_3$C en dissolvant sélectivement l'hydroxyde par action de l'acide chlorhydrique.

Dans le cas de l'hydroxyde de cobalt RIEDEL de HAEN on observe aussi, bien que moins nette, une carburation. En effet, cet hydroxyde traité dans le triéthylèneglycol à l'ébullition permet d'obtenir une phase magnétique noire contenant du cobalt et du carbone dans un rapport pondéral voisin de 10.

## Revendications

1. Procédé d'obtention d'une poudre métallique par réduction en phase liquide d'un composé solide choisi parmi les oxydes, les hydroxydes ou les sels métalliques, caractérisé par le fait que l'on soumet à une réduction par un polyol ledit composé solide d'un métal choisi dans le groupe constitué par l'or, le palladium, le platine, l'irridium, l'osmium, le cuivre, l'argent, le nickel, le cobalt, le plomb et le cadmium, par chauffage d'une suspension du produit de départ dans un polyol ou un mélange de polyols liquide à la température réactionnelle, à une température d'au moins 85°C, et que l'on isole le précipité métallique formé.

2. Procédé selon la revendication 1, caractérisé par le fait que l'on opère à une température d'au moins 100°C, en particulier de 100 à 350°C.

3. Procédé selon la revendication 1, caractérisé par le fait que ledit polyol est un glycol aliphatique ou un polyéther de glycol correspondant liquide à la température réactionnelle.

4. Procédé selon la revendication 3, caractérisé par le fait que ledit glycol est un alkylèneglycol ayant jusqu'à 6 atomes de carbone dans la chaîne principale ou un polyalkylèneglycol dérivant de ces alkylèneglycols.

5. Procédé selon la revendication 4, caractérisé par le fait que ledit glycol est choisi parmi l'éthylèneglycol, les propylèneglycols, les butanediols, le dipropylèneglycol et les polyéthylèneglycols liquides à la température réactionnelle.

6. Procédé selon la revendication 5, caractérisé par le fait que ledit polyéthylèneglycol est choisi parmi le diéthylèneglycol, le triéthylèneglycol, le tétraéthylèneglycol et le polyéthylèneglycol 300.

7. Procédé selon la revendication 1, caractérisé par le fait que ledit polyol est le glycérol.

8. Procédé selon l'une quelconque des revendications précédentes, caractérisé par le fait que le produit de départ est l'hydroxyde de nickel Ni(OH)$_2$, l'oxyde de nickel NiO ou un sel de nickel.

9. Procédé selon l'une quelconque des revendications 1 à 7, caractérisé par le fait que le produit de départ est l'hydroxyde de cuivre Cu(OH)$_2$, un oxyde de cuivre CuO ou Cu$_2$O, ou un sel de cuivre.

10. Procédé selon l'une quelconque des revendications 1 à 7, caractérisé par le fait que le produit de départ est un sel d'argent.

11. Procédé selon l'une quelconque des revendications 1 à 7, caractérisé par le fait que le produit de départ est l'hydroxyde de cobalt Co(OH)$_2$, l'oxyde de cobalt Co$_3$O$_4$, ou un sel de cobalt.

12. Procédé selon l'une quelconque des revendications 1 à 7, caractérisé par le fait que le produit de départ est l'oxyde de plomb PbO ou un sel de plomb.

13. Procédé selon l'une quelconque des revendications 1 à 7, caractérisé par le fait que le produit de départ est l'hydroxyde de cadmium Cd(OH) ou un sel de cadmium.

**Patentansprüche**

1. Verfahren zur Herstellung eines Metallpulversdurch Flüssigphasenreduktion einer festen Zubereitung, ausgewählt aus den Oxyden, Hydroxiden oder Metallsalzen der Metalle, dadurch gekennzeichnet, daß man die Reduktion der festen Metallzube reitung ausgewahlt aus einem Metall der Gruppe bestehend aus Gold, Palladium, Platin, Iridium, Osmium, Kupfer, Silber, Nickel, Kobalt, Blei und Cadmium in einem Polyol durchführt, wobei man sie in Form einer Suspension des Ausgangsmaterials in einem bei Reaktionstemperatur flüssigen Polyol oder Polyolgemisch auf eine Temperatur von mindestens 85° C erwärmt und den gebildeten Metallniederschlag isoliert.

2. Verfahren nach Anspruch 1, dadurch gekennzeichnet, daß man bei einer Temperatur von mindestens 100° C, insbesondere 100 bis 350° C arbeitet.

3. Verfahren nach Anspruch 1, dadurch gekennzeichnet, daß das Polyol ein aliphatisches Glykol oder ein Polyäther des entsprechenden Glykols ist, das bei der Reaktionstemperatur flüssig ist.

4. Verfahren nach Anspruch 3, dadurch gekennzeichnet, daß das Glykol ein Alkylenglykol ist, das bis 6 Kohlenstoffatome der Hauptkette besitzt, oder ein Polyalkylenglykol, das von diesen Alkylenglykolen abgeleitet ist, darstellt.

5. Verfahren nach Anspruch 4, dadurch gekennzeichnet, daß das Glykol ausgewählt ist aus Äthylenglykol, Propylenglykole, Butandiole, Dipropylenglykol und den bei Reaktionstemperatur flüssigen Polyäthylenglykolen.

6. Verfahrennach Anspruch 5, dadurch gekennzeichnet, daß das Polyäthylenglykol ausgewählt ist aus Diäthylenglykol, Triäthylenglykol, Tetraäthylenglykol und Polyäthylenglykol 300.

7. Verfahren nach Anspruch 1, dadurch gekennzeichnet, daß das Polyol Glycerol ist.

8. Verfahren nach den vorhergehenden · Ansprüchen, dadurch ge kennzeichnet, daß das Ausgangsprodukt Nickelhydroxid Ni(OH)$_2$ Nickeloxid NiO oder ein Nickelsalz ist.

9. Verfahren nach den Ansprüchen 1 bis 7, dadurch gekennzeichnet, daß das Aushanhsprodukt Kupferoxid Cu(OH)$_2$, ein Kupferoxid CuO oder Cu$_2$O oder ein Kupfersalz ist.

10. Verfahren nach den Ansprüchen 1 bis 7, dadurch gekennzeichnet, daß das Ausgangsprodukt ein Silbersalz ist.

11. Verfahren nach den Ansprüchen 1 bis 7 dadurch gekennzeichnet, daß das Ausgangsprodukt Kobalthydroxid Co(OH)$_2$, Kobaltoxid Co$_3$O$_4$ oder ein Kobaltsalz ist.

12. Verfahren nach den Ansprüchen 1 bis 7, dadurch gekennzeichnet, daß das Ausgangsprodukt Bleioxid PbO oder ein Bleisalz ist.

13. Verfahren nach den Ansprühen 1 bis 7, dadurch gekennzeichnet, daß das Ausgangsprodukt Cadmiumhydroxid Cd(OH)$_2$ oder ein Cadmiumsalz ist.

**Claims**

1. A method of obtaining a metallic powder by reduction in the liquid phase of a solid compound chosen from the oxides, the hydroxides or the metallic salts, characterized by the fact that the said solid compound of a metal chosen from the group consisting of gold, palladium, platinum, iridium, osmium, copper, silver, nickel, cobalt, lead and cadmium, is subjected to reduction by a polyol by heating a suspension of the starting product in a polyol or a mixture of polyols, which is liquid at the temperature of reaction, to a temperature - of at least 85° C, and that the metallic precipitate formed is isolated.

2. A method as in Claim 1, characterized by the fact that operation is carried out at a temperature of at least 100° C, in particular from 100 to 350° C.

3. A method as in Claim 1, characterized in that the said polyol is an aliphatic glycol or a corresponding polyether of glycol, which is liquid at the temperature of reaction.

4. A method as in Claim 3, characterized in that the said glycol is an alkyleneglycol having up to 6 carbon atoms in the main chain or a polyalkyleneglycol derivative from these alkyleneglycols.

5. A method as in Claim 4, characterized by the fact that the said glycol is chosen from ethyleneglycol, the propyleneglycols, the butanediols, dipropyleneglycol and the polethyleneglycols, which are liquid at the temperature of reaction.

6. A method as in Claim 5, characterized by the fact that the said polyethyleneglycol is chosen from diethyleneglycol, triethyleneglycol, tetraethyleneglycol and polyethyleneglycol 300.

7. A method as in Claim 1, characterized by the fact that the said polyol is glycerol.

8. A method as in any one of the preceding Claims, characterized by the fact that the starting product is nickel hydroxide Ni $(OH)_2$, nickel oxide NiO or a nickel salt.

9. A method as in any one of the Claims 1 to 7, characterized by the fact that the starting produkt is copper hydroxide Cu $(OH)_2$, a copper oxide CuO or $Cu_2O$, or a copper slat.

10. A method as in any one of the Claims 1 to 7, characterized by the fact that the starting product is a salt of silver.

11. A method as in any one of the Claims 1 to 7, characterized by the fact that the starting product is cobalt hydroxide Co $(OH)_2$, cobalt oxide $Co_3O_4$ or a cobalt salt.

12. A method as in any one of the Claims 1 to 7, characterized by the fact that the starting product is lead oxide PbO or a lead salt.

13. A method as in any one of the Claims 1 to 7, characterized by the fact that the starting product is cadmium hydroxide Cd $(OH)_2$ or a cadmium salt.